# EUROPÄISCHE PATENTSCHRIFT

(11) **EP 2 643 485 B1**
(45) Veröffentlichungstag und Bekanntmachung des Hinweises auf die Patenterteilung: **13.08.2014**
(21) Anmeldenummer: 11818994.3
(22) Anmeldetag: 22.11.2011
(51) Int. Cl.: C13K 1/02, C13K 1/06, C08H 8/00

(54) **VERFAHREN ZUR SÄUREKATALYSIERTEN DEPOLYMERISATION VON CELLULOSE**
METHOD FOR THE ACID-CATALYZED DEPOLYMERIZATION OF CELLULOSE
PROCÉDÉ DE DÉPOLYMÉRISATION DE CELLULOSE, CATALYSÉE PAR DE L'ACIDE

(30) Priorität: 25.11.2010 DE 102010052602; 23.02.2011 DE 102011012102
(43) Veröffentlichungstag der Anmeldung: 02.10.2013
(73) Patentinhaber: Studiengesellschaft Kohle MbH, 45470 Mülheim an der Ruhr (DE)
(72) Erfinder: SCHÜTH, Ferdi, 45470 Mülheim an der Ruhr (DE); RINALDI, Roberto, 45468 Mülheim an der Ruhr (DE); MEINE, Niklas, 45470 Mülheim an der Ruhr (DE)
(86) Internationale Anmeldenummer: PCT/DE2011/075282
(87) Internationale Veröffentlichungsnummer: WO 2012/097781

(56) Entgegenhaltungen:
- EP-A1- 0 051 237
- EP-A2- 0 037 912
- EP-A2- 0 081 678
- WO-A1-03/046227
- WO-A1-2009/061750
- WO-A1-2010/009958
- WO-A1-2010/035832
- WO-A2-2011/103180
- DE-A1- 3 312 450
- GB-A- 376 323
- US-A- 4 292 089
- US-A- 4 478 644
- US-A- 6 063 204
- US-A1- 2003 199 049
- US-A1- 2010 126 501

## Beschreibung

Die vorliegende Erfindung betrifft ein Verfahren zur säurekatalysierten Depolymerisation von Cellulose, in welchem Cellulose mit einer Säure unter Einwirkung von mechanischer Energie in Kontakt gebracht wird.

Die Verwendung von Biomasse als Basismaterial für Brennstoffe und für chemische Grundstoffe ist derzeit Gegenstand von umfangreichen Untersuchungen. Cellulose, die Hauptkomponente von lignocellulosehaltiger Biomasse, wird als mögliches Rohmaterial angesehen. Um geeignete und bearbeitbare Produkte zu erhalten, muss die Cellulose in kleinere Moleküle aufgebrochen werden.

Bereits zu Beginn des 20. Jahrhunderts wurde versucht, Cellulose durch mechanisches Vermahlen in kleinere Moleküle umzuwandeln. Kugelmühlen wurden eingesetzt, um die Kristallinität der Cellulose zu reduzieren. Grohn et al. (Journal of Polymer Science 1958, 30, 551) entwickelten ein Verfahren zum Umwandeln von Cellulose in wasserlösliche Produkte mit einer Umwandlungsrate von 90 %, in welchem die Cellulose 900 Stunden in einem Stahlkessel vermahlen wurde.

Ein weiterer Versuch, Cellulose katalytisch zu hydrolysieren ist in der WO 2009/061750 offenbart, in welcher ein Verfahren zur Herstellung von löslichen Zuckern aus einem Cellulose-haltigen Material offenbart wird. Das Cellulose-haltige Material wird mit einer festen Säure in Kontakt gebracht und über einen längeren Zeitraum miteinander gerührt, um so ein Produkt aus löslichen Zuckern zu erhalten. Die verwendete feste Säure hat jedoch den Nachteil, dass sich während des Verfahrens quasi verbraucht wird mit der Folge, dass die katalytische Aktivität im Laufe der Verfahrensführung nachlässt und auch eine Rückgewinnung des Katalysators nicht vollständig ist. Die Umwandlung der Cellulose-haltigen Materialien in wasserlösliche Substanzen ist nicht vollständig.

Der vorliegenden Erfindung lag die Aufgabe zugrunde, die Verfahren zur säurekatalysierten Depolymerisation von Cellulose weiter zu verbessern und eine möglichst vollständige Umwandlung der Cellulose in wasserlösliche Produkte zu erhalten.

Gegenstand der vorliegenden Erfindung ist demgemäß ein Verfahren zur säurekatalysierten Depolymerisation von Cellulose, mit dem Merkmalen des Hauptanspruches

Überraschenderweise wurde gefunden, dass die katalytische Umwandlung von Cellulose in wasserlösliche Produkte nahezu vollständig erzielt wird, wenn die Cellulose bzw. das Cellulose-haltige Material in Gegenwart einer starken anorganischen und/oder organischen Säure mechanisch behandelt wird. Es werden Celluoligomere, Cellobiose, Glucose und Glycerol ohne eine nennenswerte Bildung von weiteren Nebenprodukten erhalten. Die Cellulose bzw. das Cellulose-haltige Material ist nicht auf bereits gereinigte Cellulosen oder bestimmte Cellulosen beschränkt, selbst unbehandelte Naturprodukte wie Heu und Fichtenholz können mit Ausbeuten von 75 % bzw. 87 %, Buchenholz oder Zuckerrohrbagasse sogar mit Ausbeuten über 99 % in wasserlösliche Produkte umgewandelt werden.

Soweit in der vorliegenden Anmeldung der Begriff Cellulose verwendet wird, bedeutet dieser, dass es sich hier um reine Cellulose oder Cellulose-haltige Materialien handelt. Es können sowohl Naturprodukte, wie Holz, Gräser, auch chemisch reine Cellulosen und Cellulose-haltige Materialien eingesetzt werden.

Zur Durchführung des erfindungsgemäßen Verfahrens wird eine anorganische und/oder organische Säure eingesetzt. Besonders gute Umwandlungsergebnisse werden erhalten, wenn die anorganische Säure einen pKs-Wert < 3 aufweist, vorzugsweise liegt der pKs-Wert zwischen -14 und 2. Geeignete Beispiele für anorganische Säuren sind Mineralsäuren wie Schwefelsäure, Salzsäure, Phosphorsäure, Phosphorwolframsäure, Halogenalkancarbonsäure, wie Trifluoressigsäure, und Salpetersäure, wobei Salpetersäure weniger bevorzugt ist.

Besonders gute Umwandlungsergebnisse werden erhalten, wenn die organische Säure einen pKs-Wert < 3 aufweist, vorzugsweise liegt der pKs-Wert zwischen -14 und 2. Geeignete Beispiele für organische Säuren sind Benzolsulfonsäuren und ihre Derivate, Methansulfonsäure, Trifluoressigsäure und Oxalsäure.

Es können auch Gemische der voranstehenden Säuren eingesetzt werden. Bevorzugt sind Säuren mit einem pKs-Wert kleiner als -2.

Die anorganische und/oder organische Säure wird im erfindungsgemäßen Verfahren in katalytischen Mengen eingesetzt. Vorzugsweise wird die anorganische und/oder organische Säure in einer Menge von 0,0001 bis 6,2 mmol pro g Cellulose.

Zur Durchführung des erfindungsgemäßen Verfahrens wird so vorgegangen, dass das Cellulose-haltige Material in einem ersten Verfahrensschritt mit einer Lösung der anorganischen und/oder organischen Säure in einem geeigneten Lösungsmittel imprägniert wird. Diese Verfahrensweise hat sich insbesondere für die anorganischen Säuren als vorteilhaft erwiesen. Dazu wird die Säure zunächst mit einem geeigneten Lösungsmittel vermischt. Als Lösungsmittel sind alle Lösungsmittel, die die Reaktion nicht negativ beeinflussen, geeignet, wie Wasser und organische Lösungsmittel wie Diethylether, Dichlormethan, Ethanol, Methanol, THF, Aceton und jedes andere polare oder unpolare Lösungsmittel, in welchem die eingesetzte Säure löslich ist, oder das eine gute Vermischung von Cellulose und Säure in einer Dispersion ermöglicht, und welches einen Siedepunkt von 100 °C und darunter hat. In diesem möglichen Verfahrensschritt wird die Lösung bzw. Dispersion der anorganischen und/oder organischen Säure mit dem Cellulose-haltigen Material vermischt und gegebenenfalls für einige Zeit stehengelassen. Vor der mechanischen Behandlung der Cellulose wird das Lösungsmittel wieder entfernt. Insbesondere, wenn als Lösungsmittel ein niedrigsiedendes Lösungsmittel eingesetzt wird, kann dieses auf einfache Weise, entweder durch leichtes Erwärmen und/oder durch Anlegen von Vakuum wieder entfernt werden. Die Säure, die üblicherweise einen höheren Siedepunkt hat, verbleibt auf dem Cellulosematerial. Anschließend kann die mechanische Behandlung der Cellulose in Gegenwart der anorganischen und/oder organischen Säure erfolgen. Es wurde festgestellt, dass der Umwandlungsgrad der Cellulose durch das Imprägnieren des Cellulosematerials mit anorganischer und/oder organischer Säure in Gegenwart eines Lösungsmittels gesteigert werden kann.

Die mechanische Behandlung kann beispielsweise durch Vermahlen, Extrudieren oder Kneten erfolgen. Als Mühlen können solche eingesetzt werden, die unter Verwendung von Mahlkörpern das Mahlgut zerkleinern, wie z. B. Schwingmühlen, Rührwerksmühlen, Rührwerkskugelmühlen, Kugelmühlen usw. Besonders bevorzugt sind Kugelmühlen. Als Extruder können alle aus dem Stand der Technik bekannte Extruder zur Anwendung kommen.

Wie bereits eingangs berichtet, können mit dem erfindungsgemäßen Verfahren nahezu qualitative Umwandlungen der Cellulosematerialien erreicht werden. Es werden wasserlösliche Celluoligomere, Cellubiose, Glucose und Glycerol erhalten, wobei die Bildung von Nebenprodukten weitgehend vermieden werden kann.

Wird das erfindungsgemäße Verfahren in einer Kugelmühle durchgeführt, so haben sich Drehzeiten von 400 bis 1.200, vorzugsweise 800 bis 1.000 U/min als geeignet erwiesen. Die Reaktionszeit, d. h. die Zeit, in welcher die mechanische Behandlung erfolgt, beträgt üblicherweise von 0,01 bis 24 Stunden, wobei Zeiträume von 1,5 bis 12 Stunden ausreichend sind.

Die vorliegende Erfindung wird in den nachfolgenden Beispielen näher erläutert, ohne die Erfindung auf diese Beispiele zu beschränken.

### BEISPIELE

### Beispiel 1

0,52 mL Schwefelsäure (95 - 97 %, Handelsprodukt der Firma J. T. Baker, USA) wurde in 150 mL Diethylether gelöst. 10 g α-Cellulose wurde anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Eine Probe des erhaltenen Feststoffs wurde mit Phenylisocyanat für die GPC-Analyse derivatisiert. Eine weitere Probe wurde in Wasser gelöst und mittels HPLC-Analyse untersucht.

Die säurekatalysierte Depolymerisation von Cellulose in der Kugelmühle ergab innerhalb von 2 Stunden Mahlzeit einen vollständigen Umsatz der Cellulose zu wasserlöslichen Produkten mit einem Polymerisationsgrad von 3 Anhydro-glucoseeinheiten (AGU). Die Produkte bestehen aus 94 % wasserlöslichen Cellooligomeren, 3 % Glycerin, 1 % Cellobiose und 2 % Glucose.

### Beispiel 2

0,52 mL Schwefelsäure (95 - 97 %, Handelsprodukt der Firma J. T. Baker, USA) wurde in 150 mL Diethylether gelöst. 10 g α-Cellulose wurde anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Eine Probe des erhaltenen Feststoffs wurde mit Phenylisocyanat für die GPC-Analyse derivatisiert. Eine weitere Probe wurde in Wasser gelöst und mittels HPLC-Analyse untersucht.

Die säurekatalysierte Depolymerisation von Cellulose in der Kugelmühle ergab innerhalb von 30 Minuten Mahlzeit einen Umsatz der Cellulose zu 59 % wasserlöslichen Produkten mit einem Polymerisationsgrad von 31 Anhydro-glucoseeinheiten (AGU).

Um die Wasserlöslichkeit zu bestimmen wurden 0,5 g der Produkte nach dem Mahlen in ein Zentrifugenröhrchen mit Wasser geschüttelt und zentrifugiert. Der Rückstand wurde zwei Mal gewaschen und zentrifugiert, anschließend über Nacht bei 90 °C getrocknet und gewogen. Aus diesem Wert wurde die Wasserlöslichkeit von 59 % ermittelt. Zusätzlich wurden die wasserlöslichen Produkte mittels HPLC-Analyse untersucht.

### Beispiel 3

0,76 mL Salzsäure (85 %, Handelsprodukt der Firma Fluka, USA) wurde in 150 mL Diethylether gelöst. 10 g α-Cellulose wurde anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Eine Probe wurde in Wasser gelöst und mittels HPLC-Analyse untersucht.

Die säurekatalysierte Depolymerisation von Cellulose in der Kugelmühle ergab innerhalb von 2 Stunden Mahlzeit einen vollständigen Umsatz der Cellulose zu wasserlöslichen Produkten.

### Beispiel 4

0,58 mL ortho-Phosphorsäure (85 %, Handelsprodukt der Firma Fluka, USA) wurde in 150 mL Diethylether gelöst. 10 g α-Cellulose wurde anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Eine Probe wurde in Wasser gelöst und mittels HPLC-Analyse untersucht.

Die säurekatalysierte Depolymerisation von Cellulose in der Kugelmühle ergab innerhalb von 5 Stunden Mahlzeit einen Umsatz der Cellulose zu 36 % wasserlöslichen Produkten.

Um die Wasserlöslichkeit zu bestimmen, wurden 0,5 g der Produkte nach dem Mahlen in ein Zentrifugenröhrchen mit Wasser geschüttelt und zentrifugiert. Der Rückstand wurde mehrmals gewaschen und zentrifugiert, anschließend über Nacht bei 90 °C getrocknet und gewogen. Aus diesem Wert wurde die Wasserlöslichkeit von 36 % ermittelt. Zusätzlich wurden die wasserlöslichen Produkte mittels HPLC-Analyse untersucht.

### Beispiel 5

0,52 mL Schwefelsäure (95 - 97 %, Handelsprodukt der Firma J. T. Baker, USA) wurde in 150 mL Diethylether gelöst. 10 g zerkleinerte Zuckerrohrbagasse wurde anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Die wasserlöslichen Produkte wurden mittels HPLC-Analyse untersucht.

Die säurekatalysierte Depolymerisation von Zuckerrohrbagasse in der Kugelmühle ergab innerhalb von 2 Stunden Mahlzeit einen nahezu vollständigen Umsatz (99,9 %) der Zuckerrohrbagasse zu wasserlöslichen Produkten.

### Beispiel 6

0,52 mL Schwefelsäure (95 - 97 %, Handelsprodukt der Firma J. T. Baker, USA) wurde in 150 mL Diethylether gelöst. 10 g Buchenholzsägespäne wurden anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Die wasserlöslichen Produkte wurden mittels HPLC-Analyse untersucht.

Die säurekatalysierte Depolymerisation von Buchenholz in der Kugelmühle ergab innerhalb von 2 Stunden Mahlzeit einen Umsatz der Buchenholzsägespäne zu wasserlöslichen Produkten.

### Beispiel 7

0,52 mL Schwefelsäure (95 - 97 %, Handelsprodukt der Firma J. T. Baker, USA) wurde in 150 mL Diethylether gelöst. 10 g Kiefernholzsägespäne wurden anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Die wasserlöslichen Produkte wurden mittels HPLC-Analyse untersucht.

Die säurekatalysierte Depolymerisation von Kiefernholz in der Kugelmühle ergab innerhalb von 2 Stunden Mahlzeit einen Umsatz der Kiefernholzsägespäne zu 87 % wasserlöslichen Produkten.

### Beispiel 8

0,52 mL Schwefelsäure (95 - 97 %, Handelsprodukt der Firma J. T. Baker, USA) wurde in 150 mL Diethylether gelöst. 10 g Heu wurde anschließend hinzugegeben und die Suspension mit einem Shaker (IKA, KS 130 control) für 1 Stunde bei einer Frequenz von 350 1/min geschüttelt. Danach wurde das Lösungsmittel entfernt. 1,00 g des trockenen Gemisches wurde in einem Stahlbecher mit Stahlkugeln (5 Stahlkugeln; Einzelgewicht 3,95 g) in einer Pulverisette P7 der Firma Fritsch vermahlen. Die Drehzeit der Hauptscheibe betrug 800 U/min. Die wasserlöslichen Produkte wurden mittels HPLC-Analyse untersucht.

Die säurekatalysierte Depolymerisation von Heu in der Kugelmühle ergab innerhalb von 2 Stunden Mahlzeit einen Umsatz des Heus zu 75 % wasserlöslichen Produkten.

**Tabelle 1 - Depolymerisation von α-Cellulose (1,00 g) mit anorganischen Säuren (0,92 mmol) in der Planetenmühle. Vor der Vermahlung wurde die Säure in Diethylether gelöst, Cellulose dispergiert und das Lösungsmittel entfernt.**

| Experiment | Mahlzeit bei 800 U/min [h] | wasserlösliche Produkte [%] |
|---|---|---|
| Cellulose imprägniert mit H₂SO₄ (ohne mechanische Behandlung) | 0 | 18 |
| Cellulose + H₂SO₄ | 0.25 | 38 |
| Cellulose + H₂SO₄ | 0.5 | 59 |
| Cellulose + H₂SO₄ | 1 | 84 |
| Cellulose + H₂SO₄ | 1.5 | 97 |
| Cellulose + H₂SO₄ | 2 | 100 |
| Cellulose imprägniert mit HCl (ohne mechanische Behandlung) | 0 | 11 |
| Cellulose + HCl | 1 | 77 |
| Cellulose + HCl | 2 | 100 |
| Cellulose + H₃PO₄ | 5 | 38 |

**Tabelle 2 - Depolymerisation von α-Cellulose (1 g, 6,2 mmol bezogen auf AGU-Einheiten) mit Schwefelsäure in der Planetenmühle**

| Mahlzeit bei 800 U/min (h) | Katalysator | n_{Katalysator} (mmol) | DPw | DPn |
|---|---|---|---|---|
| 0,5 | H₂SO₄ | 0,92 | 31 | 19 |
| 2 | H₂SO₄ | 0,92 | 3 | 3 |

**Tabelle 3. Depolymerisation von lignozellulosischer Biomasse (1,00 g) mit Schwefelsäure (0,92 mmol) in der Planetenmühle. Vor der Vermahlung wurde die Säure in Diethylether gelöst, die lignozellulosische Biomasse dispergiert und das Lösungsmittel entfernt.**

| **Biomasse** | **Mahlzeit bei 800 U/min [h]** | **wasserlösliche Produkte [%]** |
|---|---|---|
| Zuckerrohrbagasse | 2 | 99,9 |
| Buchenholz | 2 | 99,9 |
| Kiefernholz | 2 | 87 |
| Heu | 2 | 75 |

## Patentansprüche

1. Verfahren zur säurekatalysierten Depolymerisation von Cellulose, in welchem Cellulose-haltiges Material in Gegenwart einer anorganischen und/oder organischen Säure in katalytischen Mengen mechanisch behandelt wird, wobei die Cellulose vor der mechanischen Behandlung mit einem Gemisch der Säure in einem Lösungsmittel behandelt wird und das Lösungsmittel vor der mechanischen Behandlung entfernt wird, wobei die mechanische Behandlung ein Vermahlen in einer Mühle ist, in welcher das Mahlgut unter Verwendung von Mahlkörpern zerkleinert wird.

2. Verfahren nach Anspruch 1, **dadurch gekennzeichnet, dass** die Säure einen pKs-Wert von -14 bis 2 hat.

3. Verfahren nach Anspruch 1 oder 2, **dadurch gekennzeichnet, dass** die anorganische Säure ausgewählt ist aus Schwefelsäure, Salzsäure, Phosphorsäure, Salpetersäure, Phosphorwolframsäure und deren beliebigen Gemischen.

4. Verfahren nach einem der Ansprüche 1 bis 3, **dadurch gekennzeichnet, dass** die organische Säure ausgewählt ist aus Benzolsulfonsäure, p-Toluolsulfonsäure, Nitrobenzolsulfonsäuren, 2,4,6-Trirnethylbenzolsulfonsäure, oder Derivaten der voranstehenden, Methansulfonsäure, Maleinsäure, Oxalsäure, Halogenalkancarbonsäuren, wie Trifluoressigsäure, und deren beliebigen Gemischen.

5. Verfahren nach einem der Ansprüche 1 bis 4, **dadurch gekennzeichnet, dass** die anorganische und/oder organische Säure in einer Menge von 0,0001 bis 6,2 mmol pro g Cellulose-haltigem Material eingesetzt wird.

6. Verfahren nach einem der Ansprüche 1 bis 5, **dadurch gekennzeichnet, dass** die Mühle ausgewählt ist aus Schwingmühlen, Rührwerksmühlen, Rührwerkskugelmühlen und Kugelmühlen.

7. Verfahren nach einem der Ansprüche 1 bis 6, **dadurch gekennzeichnet, dass** als Reaktionsprodukte wasserlösliche Celluoligomere, Cellobiose, Glucose und Glycerol erhalten werden.

## Claims

1. A method for the acid-catalyzed depolymerization of cellulose, said method comprising a mechanical treatment of cellulose-containing material in the presence of an inorganic and/or organic acid in catalytic amounts **characterized in that** the mechanical treatment of the cellulose with an acid is preceded by treatment of the cellulose with a mixture of said acid in a solvent and the solvent is removed before the mechanical treatment whereby the mechanical treatment is a grinding operation wherein the millbase is comminuted by using grinding media.

2. The method as claimed in claim 1, **characterized in that** the acid has a pKa value of -14 to 2.

3. The method as claimed in claim 1 or 2, **characterized in that** the inorganic acid is selected from sulfuric acid, hydrochloric acid, phosphoric acid, nitric acid, phosphotungstic acid and any desired mixtures thereof.

4. The method as claimed in any of claims 1 to 3, **characterized in that** the organic acid is selected from benzenesulfonic acid, p-toluenesulfonic acid, nitrobenzenesulfonic acids, 2,4,6-trimethyl-benzenesulfonic acid, or derivatives thereof, methanesulfonic acid, maleic acid, oxalic acid, haloalkanecarboxylic acids, such as trifluoroacetic acid, and any desired mixtures thereof.

5. The method as claimed in any of claims 1 to 4, **characterized in that** the inorganic acid is used in an amount of 0.0001 to 6.2 mmol per g of cellulose-containing material.

6. The method as claimed in claim 5, **characterized in that** the mill is selected from swing mills, stirred mills, stirred-media mills and ball mills.

7. The method as claimed in any of claims 1 to 6, **characterized in that** water-soluble celluoligomers, cellobiose, glucose and glycerol are obtained as reaction products.

## Revendications

1. Procédé de dépolymérisation sous catalyse acide de cellulose, selon lequel un matériau cellulosique est traité mécaniquement en présence d'un acide inorganique et/ou organique en quantités catalytiques, la cellulose étant traité avant le traitement mécanique avec un mélange de l'acide dans un solvant, et le solvant étant éliminé avant le traitement mécanique, le traitement mécanique étant un broyage dans un broyeur, dans lequel le produit à broyer est broyé en utilisant des corps de broyage.

2. Procédé selon la revendication 1, **caractérisé en ce que** l'acide présente un pKs de -14 à 2.

3. Procédé selon la revendication 1 ou 2, **caractérisé en ce que** l'acide inorganique est choisi parmi l'acide sulfurique, l'acide chlorhydrique, l'acide phosphorique, l'acide nitrique, l'acide phosphotungstique et leurs mélanges quelconques.

4. Procédé selon l'une quelconque des revendications 1 à 3, **caractérisé en ce que** l'acide organique est choisi parmi l'acide benzènesulfonique, l'acide p-toluènesulfonique, les acides nitrobenzènesulfoniques, l'acide 2,4,6-triméthylbenzènesulfonique, ou les dérivés des acides précédents, l'acide méthanesulfonique, l'acide maléique, l'acide oxalique, les acides halogénoalcanecarboxyliques, tels que l'acide trifluoroacétique, et leurs mélanges quelconques.

5. Procédé selon l'une quelconque des revendications 1 à 4, **caractérisé en ce que** l'acide inorganique et/ou organique est utilisé en une quantité de 0,0001 à 6,2 mmol par g de matériau cellulosique.

6. Procédé selon l'une quelconque des revendications 1 à 5, **caractérisé en ce que** le broyeur est choisi parmi les broyeurs vibrants, les broyeurs à agitation, les broyeurs à boulets et à agitation et les broyeurs à boulets.

7. Procédé selon l'une quelconque des revendications 1 à 6, **caractérisé en ce que** des oligomères de cellulose solubles dans l'eau, du cellobiose, du glucose et du glycérol sont obtenus en tant que produits de réaction.
